# EUROPEAN PATENT APPLICATION

(11) **EP 4 600 148 A1**
(43) Date of publication of application: **13.08.2025**
(21) Application number: 24156191.9
(22) Date of filing: 07.02.2024
(51) Int. Cl.: B64C 27/00, B64C 1/06, F16B 11/00

(54) **A STRUCTURALLY BONDED ARRANGEMENT**

(71) Applicant: AIRBUS HELICOPTERS DEUTSCHLAND GmbH, 86609 Donauwörth (DE)
(72) Inventor: BLACHA, Martin, 86609 DONAUWÖRTH (DE); BUESING, Sebastian, 86159 AUGSBURG (DE); PABST, Kevin, 86707 WESTENDORF (DE)
(74) Representative: GPI Brevets

(57) **Abstract**

The present technology is related to a structurally bonded arrangement (160) for structurally bonding a first component (210) to a second component (220). The structurally bonded arrangement includes a first connecting area (215) of the first component (210), a second connecting area (225) of the second component (220) that is spaced apart from the first connecting area (215) to form an interspace (230), and multiple interconnecting components (270) arranged across the interspace (230). First and second interconnecting components (270a, 270b) of the multiple interconnecting components (270) are structurally bonded separate from each other to the first connecting area (215) at separate first bonding areas (280a, 280b) and to the second connecting area (225) at separate second bonding areas (290a, 290b) thereby structurally bonding the first component (210) to the second component (220). The present technology is also related to a rotorcraft (100) with such a structurally bonded arrangement (160).

## Description

The present technology is related to a structurally bonded arrangement that is suitable for use in a rotorcraft. The present technology is further related to a rotorcraft that comprises such a structurally bonded arrangement.

A structurally bonded arrangement used in a rotorcraft must be comparatively strong and damage tolerant with high load transfer capabilities. Particularly, when such a structurally bonded arrangement is part of the outer shell of the rotorcraft, a high reliability of the structurally bonded arrangement must be achieved to prevent loss of structural integrity in the given rotorcraft under any condition.

A major challenge in certification of structurally bonded arrangements which form bonded joints, e.g. in aerospace applications, resides in the demonstration of damage tolerance and the proof of no-growth of potential defects in an associated bond line. In fact, a given bonded joint shall normally not be the weakest point when joining parts together, but in reality, cracks and crack propagation in respective bondings, i.e. in associated adhesive layers of the given bonded joint, may occur. This may be the result of manufacturing imperfections, surface contamination of respective joining partners, local disbonding, defects due to damages caused by impacts, and so on.

However, as a suitable inspection of bonded joints is comparatively difficult due to restricted accessibility and a limited obtainable quality of respective inspection methods, crack propagation is difficult to detect or to predict. Moreover, if a defect in a given bond line exists, it is almost impossible to identify the defect and to rate its size or characteristics with regular inspection and quality control methods. Due to this unpredictability of cracks and/or imperfections the defects may grow without control and/or without being recognized. In general, a crack propagates when load above a certain level is applied repeatedly to a bonded joint.

Occurrence of a crack is due to stress conditions in the bonded joint. Unfortunately, stress peaks in a lap shear bonding are almost inevitable by the structure-mechanical principle of such a bonding, and a crack may lead to a sudden rupture of a complete bonding. As a consequence, the entire bonded joint may lose its load bearing capability if no crack-stopping features are implemented. Therefore, in current bonded joint designs separate crack-stopping features are introduced in respective bond lines, such as additional rivets, which typically stop any crack growth.

More specifically, shear stress concentration and respective shear stress peaks at both ends in transverse or width direction of a bond line of a lap shear bonding in a bonded joint represent generally a major structure-mechanical problem. Furthermore, besides the shear stress concentration and the respective stress peaks, additional secondary and very detrimental stresses may occur in the bond line of the lap shear bonding and may reduce a transferrable load significantly. These secondary stresses impact adversely the sizing stress peak, which is mainly the peel-off stress that, in most cases, is the most critical stress component.

Although shear stress peaks in a lap shear bonding may be reduced by various different means, such means generally have no impact on the distribution of stresses in longitudinal or length direction of the bond line. More specifically, standard methods for shear stress peak reduction exist. Such methods include the use of additional rivets. However, there are no known methods for integrating damage-tolerance features, especially crack stoppers, into a lap shear bonding itself, in particular over an entire length of a given bond line.

In any case, it is important to note that influencing an underlying stress state of a lap shear bonding does not automatically mean that damage tolerance is achieved. Instead, damage tolerance and stress optimization are to be regarded separately. More particularly, the stress state in a lap shear bonding of a bonded joint is highly dependent on respective loading conditions which, thus, allow to influence stresses in the complete lap shear bonding. Accordingly, there are different possibilities for influencing the stresses, as well as associated fail-safe-capabilities.

For instance, the document EP 2 199 064 A1 describes a bonded joint between two different components which abut in longitudinal or length direction against each other, with a through-thickness form-fit connection and a butt joint bonding, i.e. a bonding along the abutment. Similarly, the documents CN 115 539 472 A, EP 2 347 888 A2 and US 2 391 731 A also describe a combination of an end-shape pattern with form-fit function and a butt joint bonding.

The document US 9 126 670 B2 describes a panel assembly for joining to a structure. The assembly has a first panel element having at least one first panel nonlinear edge, and has a second panel element having at least one second panel nonlinear edge. The second panel nonlinear edge is designed to interlace with the first panel nonlinear edge to form a panel assembly with interlaced panel edgebands for joining to a structure. A width of the interlaced panel edgebands is reduced as compared to a width of adjacent panel edgebands formed by adjacent panel elements having linear edges.

The document US 2020/0369359 A1, in turn, describes a bonded joint of two components which overlap in vertical or height direction in mutually opposed end sections provided with wave-shaped edges, wherein the bonding is provided in a respective overlap region. Similarly, the document US 1 773 068 A describes a bonded joint between two components which are further connected to each other by means of a form-fit connection.

The document EP 3 578 345 A1 describes a butt joint between two components which are interconnected in vertical or height direction by means of a form-fit connection, but without being bonded. Likewise, the documents EP 1 712 802 A1, DE 2 441 470 A1, and US 3 253 842 A describe unbonded connections between two components by means of form-fit connections forming associated interlocking patterns.

It is an objective of the present technology to provide a new design principle for a high-safety, robust, reliable, and damage-tolerant bonded joint with inherent crack-stopping features and, more particularly, to provide a new structurally bonded arrangement that is comparatively strong, robust, reliable, high-safety, damage-tolerant, with high load transfer capabilities and crack-stopping features. The structurally bonded arrangement should use existing parts, be simple to manufacture, and comparatively cheap. It is a further objective of the present technology to provide a rotorcraft comprising such a new structurally bonded arrangement.

The objective is solved by a structurally bonded arrangement comprising the features of claim 1. More specifically, a structurally bonded arrangement for structurally bonding a first component to a second component is provided that comprises a first connecting area of the first component, a second connecting area of the second component that is spaced apart from the first connecting area to form an interspace, and multiple interconnecting components arranged across the interspace. First and second interconnecting components of the multiple interconnecting components are structurally bonded separate from each other to the first connecting area at separate first bonding areas and to the second connecting area at separate second bonding areas, thereby structurally bonding the first component to the second component.

The described structurally bonded arrangement provides a simple, effective, and safe way for geometrically modifying the first and second connecting areas and the multiple interconnecting components. The present technology sub-divides a single interconnecting component along the bond line into multiple separate interconnecting components along the running length of the bonding. These separated interconnecting components, which are sometimes also referred to as "splice parts", can be of any shape although some shapes show a very effective stress distribution.

Using intermeshing patterns of almost any shape for forming the interspace between the two connecting areas together with separate interconnecting components reduces critical peel stresses to a wide extent, and the regular shear stresses occur more homogeneously. This leads to both: A fully damage-tolerant design and an increased load transfer capability of the structurally bonded arrangement.

Furthermore, manufacturing and repair of the structurally bonded arrangement is simplified as smaller parts need to be manufactured and replaced, tolerances can be adjusted more easily as every splice part can be applied separately, and, in case of a damaged splice part, only the smaller local splice part needs to be replaced. The individual sub-bondings are considered as being independent of each other, thereby enabling a very simple certification strategy.

The result is a high-safety, robust, and reliable structurally bonded arrangement having inherent crack-stopping features and a positive influence on the stress-state. No additional features such as explicit crack-stoppers are needed which reduces cost and production time. Moreover, the present technology is simple to manufacture, cheap, and requires no new or additional parts. This leads to an extremely high reliability and damage tolerance of the complete joint.

Illustratively, the present technology includes the sub-division of a single bonding comprising first and second components and a splice-plate into several sub-bondings along the running length of the bond line. The first and second components are preferably flat in respective first and second connecting areas at the bond line, and the division into sub-bondings is achieved by splitting up the splice plate of the bonding into several special shaped interconnecting components or splice parts.

If desired, the bond line may form an intermeshing pattern at the interspace between the first and second components. The result is a special pattern of the bond line connecting the first and second components. As there are multiple different combinations of straight or intermeshing patterns of the edges of the first and second connecting areas of the first and second components in combination with different shapes of the interconnecting components, a big variety of geometries can be realized according to the desired main principle of the bonding such as strength, level of damage tolerance, simplicity of manufacturing, etc.

The shape and size of the individual sub-bondings can be adapted with respect to different requirements, such as the main load direction of the bonding, the geometric dimensions of the bonding, and the criticality, needed level of robustness, acceptable maximum damage size, or failure size.

The present technology may be applicable when using multiple splice parts that connect two components in a lap shear manner. The dimension of the splice parts relative to the size of the components can be arbitrary.

Combining different shapes of the separation line between the components with separate splice parts divides the bond line between the first and second components into a plurality of independent sub-bondings along its running length. A possible crack, which might occur in the bond line for any reason, cannot propagate from one splice part to another as the crack would have to cross a gap.

Even if there is crack growth within a sub-bonding (e.g., if the stress level is too high), the crack growth is stopped at the edge of the sub-bonding as the crack cannot cross the separation between two splice parts. Consequently, damage due to a crack can grow up to the size of one sub-bonding. However, the crack growth cannot bridge the gap from one sub-bonding to the next sub-bonding.

The sub-division of a single bond line leads to independent smaller sub-bondings which are easier to manufacture and more reliable than the single bond line: if one or two sub-bondings fail, the functionality and integrity of the bond line is still intact. Furthermore, as the bond line is composed of fully separated parts, a multiple-load path design is realized.

Moreover, the sub-division of the single bond line into smaller sub-bondings creates a non-equal distribution of stresses along the running length of the bonding in order to establish a pattern of higher and lower loaded zones in the bonding. As a result, the magnitude of shear stresses relative to the magnitude of peel stresses can be traded-off in a certain range by reducing the detrimental peel stresses and increasing the dominant and desired shear stresses. In fact, the stress state varies within one sub-bonding as the overlap length changes over the running length of the bonding. Illustratively, dependent on the angle of the intermeshing pattern of the two components, the stress state can be adapted to emphasize peel stress, axial shear, or transversal shear.

In case of a failing sub-bonding, the adjacent sub-bondings have to take more load. The crack-growth stop feature and consequently a fail-safe design is established by sizing the joint accordingly. For example, the failure of a sub-bonding and the load transfer to the adjacent sub-bondings is analyzed and it is ensured (e.g., through selection of a size, shape, material of the interconnecting component, adhesive, etc. of the adjacent sub-bondings) that the load level in the adjacent sub-bondings remains below crack initiation level.

As the basic structure-mechanical principle of a single-lap shear bonding consists of the detrimental secondary effect of secondary bending, adverse peel-off stresses are generated. Due to the separation of the bond line into zones of high and low load transfer, the peel-off stresses are non-constant over the length of the bonding and can be reduced in areas with high load transfer. If desired, in exchange, the peel-off stresses can be increased in regions with low load transfer. Moreover, the intermeshing pattern between the connecting areas of the first and second components suppresses the detrimental peel stresses.

The design of the present structurally bonded arrangement increases safety significantly as the bonding is less sensitive to local cracks, manufacturing defects, or damages from the outside. As mentioned above, a possible crack cannot grow from one sub-bonding to the next and thus the intermeshing separation line acts as a crack-stopper. Consequently, the present structurally bonded arrangement is fail-safe or damage tolerant, and likely to be certifiable.

As a result, a relief for inspections is possible, and the requirements for repairs decrease as the threat of continuous crack growth is limited under a known damage. The shape and size of the sub-bondings makes the damage size and its impact predictable and thus easily assessable by stress calculations. No expensive crack-growth calculations and tests are needed.

Furthermore, the present technology is less sensitive to manufacturing defects, cracks, impacts, and damages, and no additional crack-stopping elements are needed.

The present structurally bonded arrangement is simple and comparatively cheap to manufacture as all sub-bondings can be manufactured at the same time and are regarded as one single bonding from a manufacturing point of view. If desired, bonding can be designed as double-lap shear with the same working principle, which would further increase load transferring capabilities.

In some implementations, the shape of the intermeshing pattern between the components can be adapted in angle, width, and/or length of splice-plate to any geometrical constraint and loading condition, resulting in high adaptability to any design context.

The present structurally bonded arrangement may be realized with any material or combination of materials. Compared to traditional aerospace joining technologies such as riveting, the present technology reduces manufacturing time and weight, which leads to cost savings. Cost may be further reduced as many small parts with identical geometry can be produced.

Thanks to the multiple independent interconnecting components, tolerancing is improved as each splice part can be put into place separately, and each individual splice part can be replaced separately.

In order to avoid the so-called "common-cause failure" effect, which relates to the failure of the entire bonding due to issues with the adhesive, different adhesives with different curing processes can be used for different sub-bondings of a same structurally bonded arrangement.

Furthermore, the present technology requires no unqualified pre-treatment or process. Instead, qualified materials and bonding processes can be used, and the splicing can be combined with any other means for manufacturing of the bond line including spacers or patterns in the bonding, which further increases reliability and simplifies manufacturing.

If desired, intermeshing patterns of the components can be manufactured by trimming of the existing geometry to the zigzag or any other shape, while several intermeshing patterns that are particularly suitable for an associated manufacturing process for the intermeshing pattern can be used.

According to some aspects, a same side of the respective first and second interconnecting components is structurally bonded to a same side of the first connecting area and to a same side of the second connecting area.

Illustratively, the first and second interconnecting components are splice plates that each connect the first component and the second component to each other in a lap shear manner.

According to some aspects, each one of respectively associated separate first bonding areas and separate second bonding areas have a same size and a same shape.

In some implementations, the first and second interconnecting components have a same size and a same shape.

In other implementations, the first and second interconnecting components have at least one of a different size or a different shape.

By way of example, the first interconnecting component has one of a circular shape, an elliptical shape, or a zonogonal shape.

According to some aspects, a first adhesive bonds the first interconnecting component to the first and second connecting areas, and a second adhesive that is different than the first adhesive bonds the second interconnecting component to the first and second connecting areas.

Illustratively, the first interconnecting component is made from a first material, and the second interconnecting component is made from a second material that is different than the first material.

In some implementations, the structurally bonded arrangement further comprises a stiffener that is arranged across the interspace between the first and second interconnecting components and rigidly attached to the first and second components.

According to some aspects, the first connecting area comprises a first edge with a first shape, and the second connecting area comprises a second edge with a second shape that fits to the first shape at the interspace to form an intermeshing pattern.

Illustratively, the intermeshing pattern formed by the first shape and the second shape is one of a zigzag pattern, a trapezoidal pattern, a sine wave pattern, a rectangular pattern, a sawtooth pattern, a chain of half-circles, or an arbitrary combination thereof.

By way of example, the intermeshing pattern formed by the first shape and the second shape is a rectangular pattern such that the interspace is successively oriented in bonding area length direction and in bonding area width direction. The first and second interconnecting components have a circular shape and are arranged across the interspace where the interspace is oriented in bonding area width direction such that the first bonding areas are separated from the second bonding areas by the interspace oriented in bonding area width direction.

According to some aspects, the multiple interconnecting components are loosely attached to each other for simplifying application of the multiple interconnecting components onto the first and second connecting areas.

The present technology further provides a rotorcraft with a structurally bonded arrangement as described above.

Preferred embodiments are outlined by way of example in the following description with reference to the attached drawings. In these attached drawings, identical or identically functioning components and elements are labelled with identical reference signs and are, consequently, only described once in the following description.
- Figure 1 shows a lateral view of a rotorcraft with a fuselage that comprises a structurally bonded arrangement,
- Figure 2 is a diagram of an illustrative structurally bonded arrangement with multiple, rhombus-shaped interconnecting components,
- Figure 3 shows a cross-section of an illustrative lap shear bonding that structurally bonds two components,
- Figure 4A is a diagram of an illustrative structurally bonded arrangement with multiple, rhombus-shaped interconnecting components of different size,
- Figure 4B is a diagram of an illustrative structurally bonded arrangement with multiple interconnecting components of different shape,
- Figure 4C is a diagram of an illustrative structurally bonded arrangement with multiple, rhombus-shaped interconnecting components that are bonded with different adhesives,
- Figure 4D is a diagram of an illustrative structurally bonded arrangement with multiple, rhombus-shaped interconnecting components made of different materials,
- Figure 5 is a diagram of an illustrative structurally bonded arrangement with multiple, rhombus-shaped interconnecting components and a stiffener,
- Figure 6 is a diagram of an illustrative structurally bonded arrangement with multiple, rectangular interconnecting components across a zigzag intermeshing pattern,
- Figure 7A is a diagram of an illustrative trapezoidal intermeshing pattern,
- Figure 7B is a diagram of an illustrative sine wave intermeshing pattern,
- Figure 7C is a diagram of an illustrative rectangular intermeshing pattern,
- Figure 8 is a diagram of an illustrative structurally bonded arrangement with multiple, circular interconnecting components across a rectangular intermeshing pattern,
- Figure 9A and Figure 9B are schematic views of the growth of a potential crack in a sub-bonding of the illustrative structurally bonded arrangement of Figure 8 and the impact of the potential crack on the local and global stress level and load transfer,
- Figure 10 shows the structurally bonded arrangement of Figure 6 with loosely attached interconnecting components,
- Figure 11A is a diagram of an illustrative structurally bonded arrangement with multiple, circular interconnecting components across a zigzag intermeshing pattern, and
- Figure 11B is a diagram of an illustrative structurally bonded arrangement with multiple, rhombus-shaped interconnecting components across a zigzag intermeshing pattern.

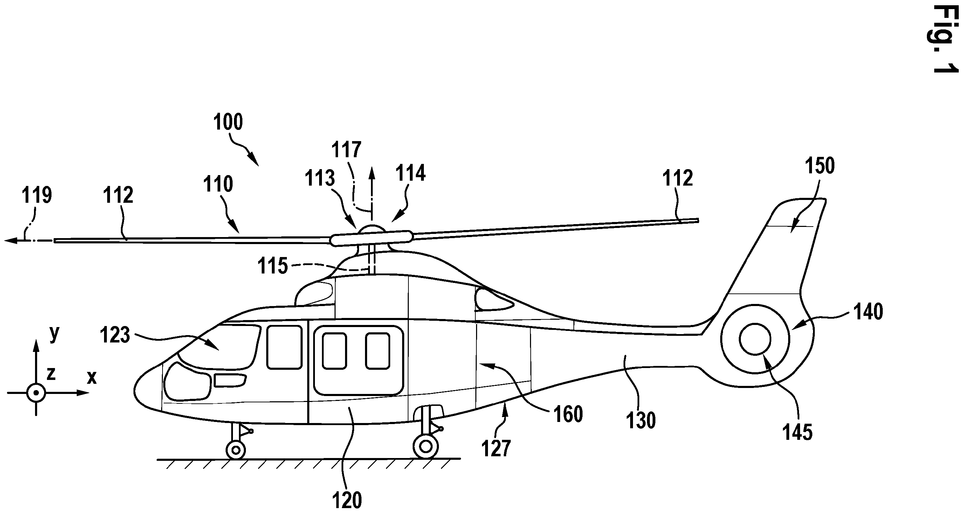

Figure 1 is a diagram of an illustrative rotary-wing aircraft 100 having a multi-blade rotor 110 with a rotor shaft 115. As shown in Figure 1, the rotary-wing aircraft 100, which is sometimes also referred to as rotorcraft 100, is illustrated as a helicopter. Thus, for purposes of simplicity and clarity, the rotorcraft 100 may hereinafter be referred to as the "helicopter" 100.

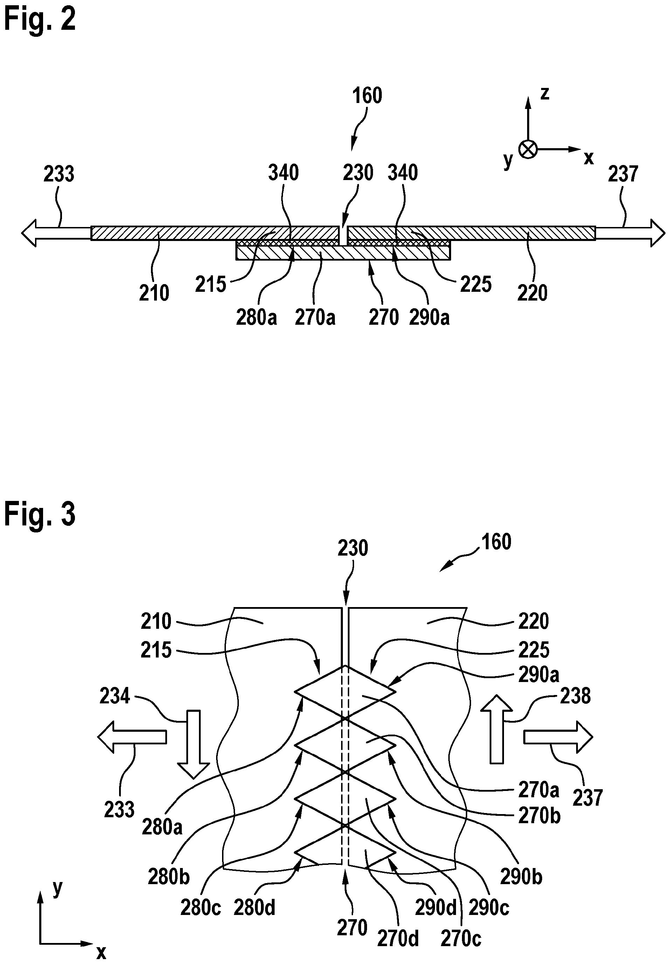

Illustratively, helicopter 100 has a fuselage 120 that forms an airframe of the helicopter 100. The fuselage 120 is connected to a suitable landing gear and illustratively forms a cabin 123 and a rear fuselage 127. Illustratively, the fuselage 120 comprises at least one structurally bonded arrangement 160. The structurally bonded arrangement 160 is described in detail below with reference to Figure 2 to Figure 11B. The rear fuselage 127 is connected to a tail boom 130.

By way of example, helicopter 100 may include at least one counter-torque device 140 configured to provide counter-torque during operation, i.e. to counter the torque created by rotation of the multi-blade rotor 110 for purposes of balancing the helicopter 100 in terms of yaw. If desired, counter-torque device 140 may be shrouded.

The at least one counter-torque device 140 is illustratively provided at an aft section of the tail boom 130 and may have a tail rotor 145. The aft section of the tail boom 130 may include a fin 150.

Illustratively, the multi-blade rotor 110 provides lift and forward or backward thrust during operation. The multi-blade rotor 110 comprises a plurality of rotor blades 112 that are mounted at an associated rotor head 114 with a rotor hub 113 to a rotor shaft 115, which rotates in operation of the helicopter 100 around an associated rotor axis 117 in a rotor plane 119.

Figure 2 is a diagram of an illustrative structurally bonded arrangement 160 for structurally bonding a first component 210 to a second component 220 using multiple interconnecting components 270.

The structurally bonded arrangement 160 may be realized on the helicopter 100 of Figure 1. The present structurally bonded arrangement 160 is, however, not limited to use in helicopters and may likewise be used in any other aircraft and, more generally, in any other vehicle, such as a car, a truck, a train, a ship, and so on.

As an example, the first and second components 210, 220 may be panels or shells of the helicopter 100 of Figure 1, such as fiber reinforced polymer panels or shells. Such fiber reinforced polymer panels or shells may comprise carbon fiber reinforced polymers, but may alternatively comprise also other kinds of reinforcement fibers, such as glass, aramid and so on.

However, it should be noted that the structurally bonded arrangement 160 is independent of an underlying material selection and combination with respect to the first, second and interconnecting components 210, 220, 270. In other words, all qualified materials and also bonding processes can be used and no additional pre-treatment or process is required.

The structurally bonded arrangement 160 includes a first connecting area 215 of the first component 210, a second connecting area 225 of the second component 220 that is spaced apart from the first connecting area 215 to form an interspace 230, and multiple interconnecting components 270. In some implementations, the interspace 230 may have the same width over the entire running length of the bond line, if desired. In other implementations, a first width of the interspace 230 at a first position of the bond line may be different from a second width of the interspace 230 at a second position of the bond line.

The multiple interconnecting components 270 are arranged across the interspace 230. In particular, first and second interconnecting components 270a, 270b of the multiple interconnecting components 270 are structurally bonded separate from each other to the first connecting area 215 at separate first bonding areas 280a, 280b and to the second connecting area 225 at separate second bonding areas 290a, 290b thereby structurally bonding the first component 210 to the second component 220.

Similarly, third and fourth interconnecting components 270c, 270d of the multiple interconnecting components 270 are structurally bonded separate from each other and separate from the first and second interconnecting components 270a, 270b to the first connecting area 215 at separate first bonding areas 280c, 280d and to the second connecting area 225 at separate second bonding areas 290c, 290d.

Illustratively, each interconnecting component of the multiple interconnecting components 270 separates the bonding area in its length direction (i.e., parallel to the y-axis) into separated sub-bondings. The sequencing of the separated sub-bondings in the length direction along the y-axis forms a bond line extending in the length direction along the y-axis.

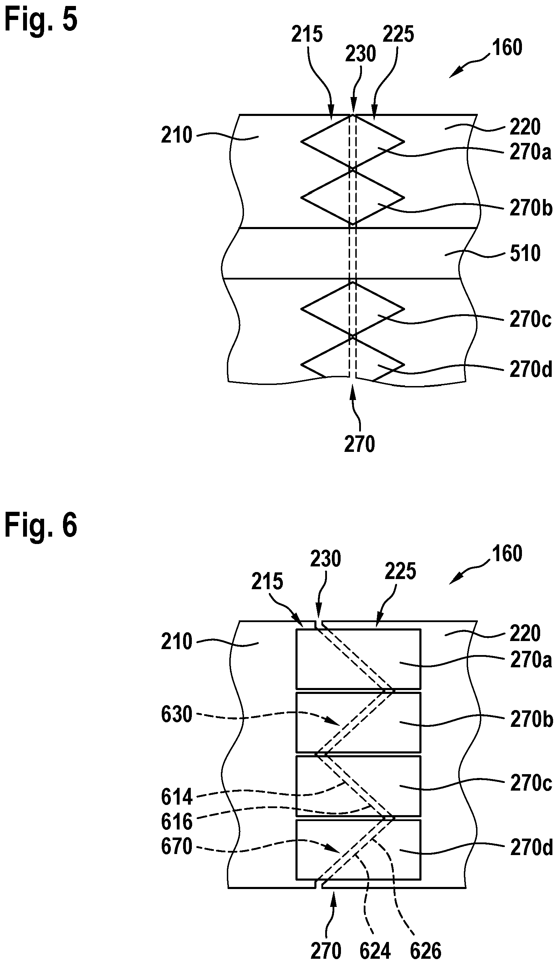

Illustratively, the first connecting area 215 includes a first edge, and the second connecting area 225 includes a second edge. As shown in Figure 2, the two edges may face each other in a straight line to form the interspace 230. However, other shapes of the edges that are different than a straight line may also be implemented and are likewise contemplated, as explained by way of example below in Figure 6 to Figure 11B.

Illustratively, the interspace 230 separates the first bonding areas 280a, 280b, 280c, 280d from the second bonding areas 290a, 290b, 290c, 290d. In some implementations, each one of respectively associated separate first bonding areas 280a, 280b, 280c, 280d and separate second bonding areas 290a, 290b, 290c, 290d have a same size and a same shape.

If desired, the first bonding areas 280a, 280b, 280c, 280d may be on a same side of the first connecting area 215, and the second bonding areas 290a, 290b, 290c, 290d may be on a same side of the second connecting area 225. The separated interconnecting components 270a, 270b, 270c, 270d are bonded separate from each other at the bonding areas (e.g., interconnecting component 270a to bonding areas 280a and 290a, interconnecting component 270b to bonding areas 280b and 290b, etc.). Thus, a same side of the respective first and second interconnecting components 270a, 270b is structurally bonded to a same side of the first connecting area 215 and to a same side of the second connecting area 225.

In some implementations, the first and second interconnecting components 270a, 270b are splice plates that each connect the first component 210 and the second component 220 to each other in a lap shear manner.

Illustratively, the structurally bonded arrangement 160 is embodied to withstand shear forces 233, 237. The shear forces 233, 237 are illustratively diametrically opposed and applied at least approximately perpendicular to the length direction (i.e., the y-axis) of the bonding area.

It should be noted that the shear forces 233, 237 are the forces acting on the bonding area, which are mainly relevant for pulling apart the components 210, 220. However, other (shear) forces 234, 238 may likewise act on the bonding area.

As shown in Figure 2, four rhombus-shaped interconnecting components 270a, 270b, 270c, 270d are arranged across the interspace 230 for simplicity and clarity of the drawings. However, any other number of interconnecting components 270 that implement separated sub-bondings and fit in the respective bonding areas may be selected instead, if desired. In some implementations, the exact number of interconnecting components may be determined based on the requirements of the structurally bonded arrangement 160.

It should further be noted that the first and second components 210, 220 are interconnected by means of the bonding area, i.e. via an adhesive layer on the interconnecting components 270. In other words, the components 210, 220 are arranged with respect to each other, but they are only interconnected in a form-fit-free manner via the interconnecting components 270. Likewise, the components 210, 220 are connected in a form-fit-free manner to the interconnecting components 270, i.e. only via bonding, i.e. by means of the adhesive layer.

Figure 3 shows a cross-section of an illustrative structurally bonded arrangement 160 of Figure 2 that structurally bonds two components 210, 220 in a lap shear manner.

Illustratively, the interconnecting component 270a is structurally bonded to the connecting areas 215, 225 at respective bonding areas 280a, 290a by means of an adhesive 340. The components 210, 220 and, more specifically, the connecting areas 215, 225 in Figure 2 and Figure 3, are spaced apart from each other on the interconnecting components 270 to form an interspace 230.

Illustratively, the first and second interconnecting components 270a, 270b of Figure 2 have a same size and a same shape. However, the first and second interconnecting components 270a, 270b may have at least one of a different size or a different shape.

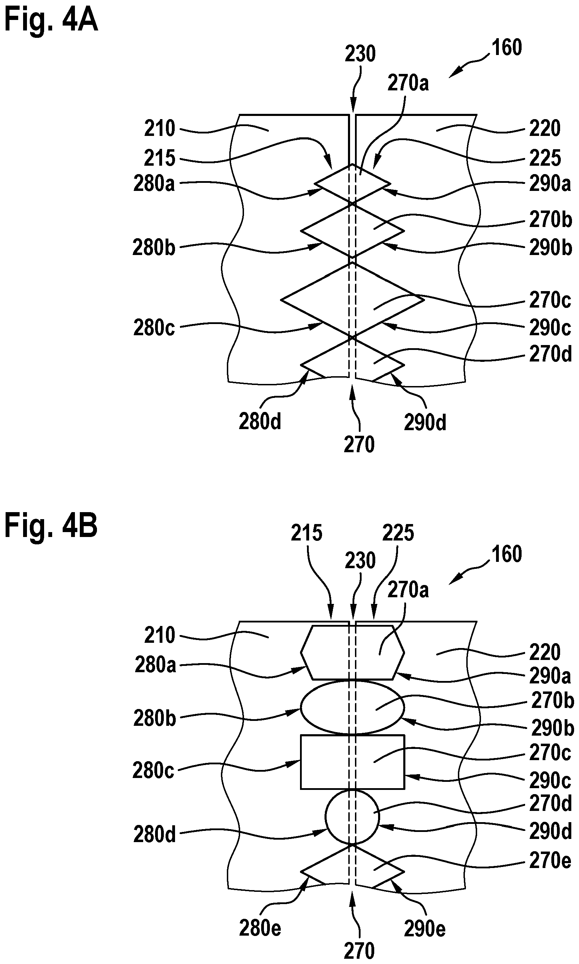

Figure 4A is a diagram of an illustrative structurally bonded arrangement 160 with multiple, rhombus-shaped interconnecting components 270 of different sizes. The sizes of each interconnecting component of the multiple interconnecting components 270 and their respective placement on the bond line may be determined based on the requirements of the structurally bonded arrangement 160.

Figure 4B is a diagram of an illustrative structurally bonded arrangement 160 with multiple interconnecting components 270 of different shape. For example, the first interconnecting component 270a may have one of a circular shape, an elliptical shape, or a zonogonal shape. As shown in Figure 4B, interconnecting component 270a has a hexagonal (i.e., zonogonal) shape, interconnecting component 270b has an elliptical shape, interconnecting component 270c a rectangular (i.e., zonogonal) shape, interconnecting component 270d a circular shape, and interconnecting component 270e a rhombus (i.e., zonogonal) shape. The shapes of each interconnecting component of the multiple interconnecting components 270 and their respective placement on the bond line may be determined based on the requirements of the structurally bonded arrangement 160.

In some implementations, all interconnecting components 270 may be bonded to the first and second connecting areas 215, 225 using the same adhesive. In other implementations, at least two of the interconnecting components 270 may be bonded to the first and second connecting areas 215, 225 using a different adhesive.

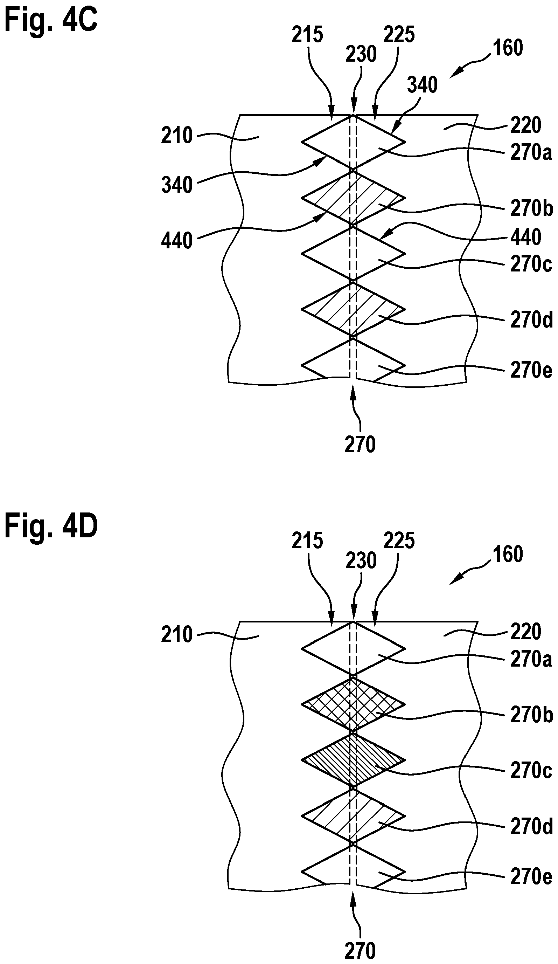

Figure 4C is a diagram of an illustrative structurally bonded arrangement with multiple, rhombus-shaped interconnecting components that are bonded to the first and second connecting areas 215, 225 with different adhesives. For example, a first adhesive 340 may bond the first interconnecting component 270a to the first and second connecting areas 215, 225, and a second adhesive 440 that is different than the first adhesive 340 may bond the second interconnecting component 270b to the first and second connecting areas 215, 225. Illustratively, the first and second adhesives may include an epoxy adhesive such as a two-component epoxy adhesive, a structural acrylic such as a methylmethacrylate (MMA), or a polyurethane adhesive.

The adhesive for bonding an interconnecting component of the multiple interconnecting components 270 to the first and second connecting areas 215, 225 and the corresponding location on the bond line may be determined based on the requirements of the structurally bonded arrangement 160.

In some implementations, all interconnecting components 270 may be made of the same material. In other implementations, at least two of the interconnecting components 270 may be made of different materials.

Figure 4D is a diagram of an illustrative structurally bonded arrangement with multiple, rhombus-shaped interconnecting components made of different materials. For example, the first interconnecting component 270a may be made from a first material, and the second interconnecting component 270a may be made from a second material that is different than the first material.

For example, the first and second materials may be composite materials such as fiber-reinforced polymers that are reinforced using carbon fiber, glass fiber, aramid fiber, basalt fiber or any other kind of fiber.

The material of each interconnecting component of the multiple interconnecting components 270 and their respective placement on the bond line may be determined based on the requirements of the structurally bonded arrangement 160.

Illustratively, the structurally bonded arrangement 160 of Figures 4B, 4C, and 4D is shown with a fifth interconnecting component 270e in addition to the four interconnecting components 270a, 270b, 270c, 270d. The fifth interconnecting component 270e is structurally bonded separate from the other interconnecting components 270a, 270b, 270c, 270d to the first connecting area 215 at a first bonding area 280e that is separate from the other first bonding areas 280a, 280b, 280c, 280d and to the second connecting area 225 at a second bonding area 290e that is separate from the other second bonding areas 290a, 290b, 290c, 290d.

Figure 5 is a diagram of an illustrative structurally bonded arrangement 160 with multiple, rhombus-shaped interconnecting components 270 and a stiffener 510. The stiffener 510 may be arranged across the interspace 230 between two interconnecting components 270b, 270c and rigidly attached to the first and second components 210, 220.

As shown in Figure 5, the stiffener 510 may take the place of an interconnecting component of the structurally bonded arrangement 160. If desired, the stiffener 510 may be attached to the first and second components 210, 220 in addition to the interconnecting components 270. In some implementations, the stiffener 510 may be attached to the first and second components 210, 220 using fasteners such as rivets, screws, bolts and nuts, or any combination thereof. In other implementations, the stiffener 510 may be attached to the first and second components 210, 220 using an adhesive instead or in addition to using fasteners such as rivets, screws, bolts and nuts, or any combination thereof.

As an example, the stiffener 510 may be attached to the first and second components 210, 220 on the side that is opposite the first and second bonding areas. In other words, the multiple interconnecting components 270 may be bonded to one side of the components 210, 220, and the stiffener may be attached to the other side of the components 210, 220. As another example, the stiffener 510 may be attached to the first and second components 210, 220 on the same side as the interconnecting components 270, whereby the stiffener 510 may be attached to the first and second components 210, 220 on top of the interconnecting components 270 or instead of one or more of the interconnecting components.

Illustratively, the first connecting area 215 includes a first edge, and the second connecting area 225 includes a second edge. As shown in Figure 5, the two edges may face each other in a straight line to form the interspace 230. However, other shapes of the edges that are different than a straight line may also be implemented.

Figure 6 is a diagram of an illustrative structurally bonded arrangement 160 with multiple, rectangular interconnecting components 270. The structurally bonded arrangement 160 includes a first connecting area 215 of a first component 210 and a second connecting area 225 of a second component 220. The second connecting area 225 is spaced apart from the first connecting area 215 to form an interspace 230.

The rectangular interconnecting components 270a, 270b, 270c, 270d are arranged across the interspace 230 and bonded separate from each other to the first connecting area 215 at separate first bonding areas 280a, 280b, 280c, 280d and to the second connecting area 225 at separate second bonding areas 290a, 290b, 290c, 290d.

As shown in Figure 6, the rectangular interconnecting components 270a, 270b, 270c, 270d may be arranged across the interspace 230 such that each one of the associated first bonding areas 280a, 280b, 280c, 280d and each one of the separate second bonding areas 290a, 290b, 290c, 290d has a same size and a same shape. For example, the size and shape of the portion of the interconnecting component 270a that overlaps with the first connecting area 215 may have a same size and shape as the portion of the interconnecting component 270a that overlaps with the second connecting area 225.

Illustratively, the first connecting area 215 may include a first edge 614 with a first shape 616, and the second connecting area 225 may include a second edge 624 with a second shape 626. The second shape 626 may fit to the first shape 616 at the interspace 230 to form an intermeshing pattern 630. As an example, the intermeshing pattern 630 is shown in Figure 6 as a zigzag pattern 670.

If desired, the intermeshing pattern 630 formed by the first shape 616 and the second shape 626 is one of a zigzag pattern 670, a trapezoidal pattern, a sine wave pattern, a rectangular pattern, a sawtooth pattern, a chain of half-circles, or an arbitrary combination thereof. If desired, the intermeshing pattern 630 may be varied along the length direction of the bonding area.

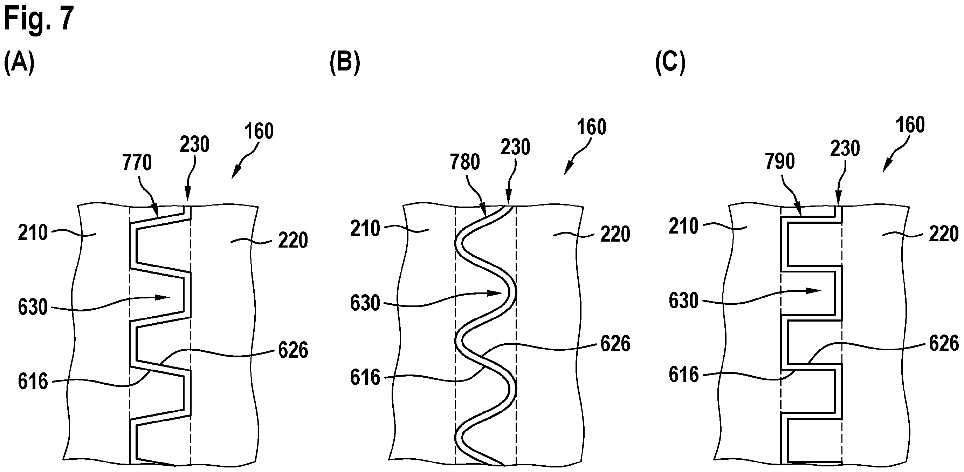

Figure 7 shows in parts (A) to (C) the structurally bonded arrangement 160 of Figure 6 without the interconnecting components to illustrate different, possible shapes of the intermeshing pattern. In fact, the first connecting area of the first component 210 has a first edge with a first shape 616, and the second connecting area of the second component 220 has a second edge with a second shape 626. The second shape 626 may fit to the first shape 616 at the interspace 230 to form an intermeshing pattern 630. In particular, Figure 7A shows the structurally bonded arrangement 160 with the interspace 230 having an illustrative trapezoidal pattern 770, Figure 7B with an illustrative sine wave pattern 780, and Figure 7C with an illustrative rectangular pattern 790.

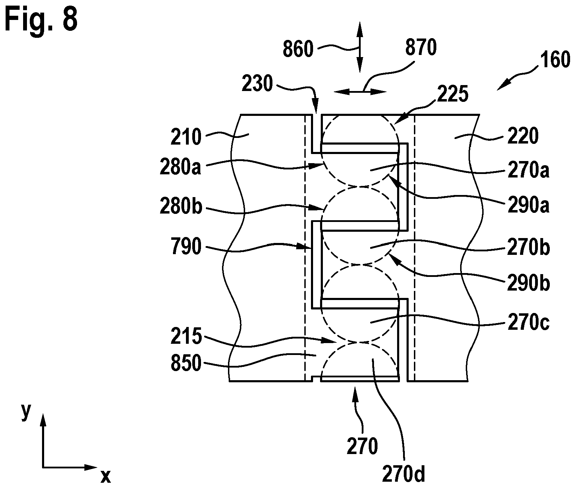

Figure 8 is a diagram of an illustrative structurally bonded arrangement 160 with multiple circular interconnecting components 270 arranged across a rectangular intermeshing pattern 790 in a bonding area 850.

Illustratively, the interspace 230 of the rectangular intermeshing pattern 790 that is formed by the shapes of the edges of the connecting areas 215, 225 (e.g., first and second shapes 616, 626 of Figure 7C) is successively oriented in bonding area length direction 860 (i.e., parallel to the y-axis) and in bonding area width direction 870 (i.e., parallel to the x-axis).

The portions of the rectangular intermeshing pattern 790 oriented in bonding area length direction 860 may have a different length than the portions of the rectangular intermeshing pattern 790 oriented in bonding area width direction 870. If desired, the portions of the rectangular intermeshing pattern 790 oriented in bonding area length direction 860 may have different lengths for different positions on the y-axis. As shown in Figure 8, the portions of the rectangular intermeshing pattern 790 oriented in bonding area length direction 860 may have the same length as the portions of the rectangular intermeshing pattern 790 oriented in bonding area width direction 870 and repeat periodically along the y-axis.

The interconnecting components 270 that are arranged across the interspace 230 may have any shape such as a circular shape, an elliptical shape, or a zonogonal shape. As shown in Figure 8, the interconnecting components 270, including the first and second interconnecting components 270a, 270b may have a circular shape.

By way of example, the first and second interconnecting components 270a, 270b are arranged across the interspace 230 where the interspace 230 is oriented in bonding area width direction 870 (i.e., parallel to the x-axis) such that the first bonding areas 280a, 280b are separated from the second bonding areas 290a, 290b by the interspace 230 oriented in bonding area width direction 870. Thus, the interspace 230 that is bridged by the interconnecting components 270 is perpendicular to the bonding area length direction 860 and thus perpendicular to the bond line, which is parallel to the y-axis.

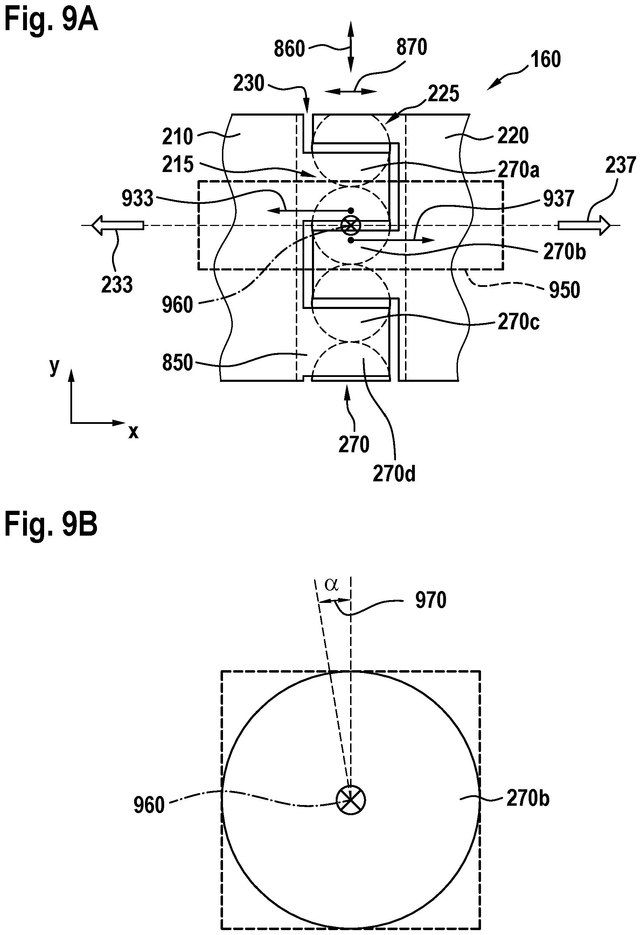

Figure 9A and Figure 9B are schematic views of the effect of shear forces 233, 237 acting on the illustrative structurally bonded arrangement 160 of Figure 8 and the impact of a potential crack on the local and global stress level and load transfer.

As shown in Figure 9A, the portions of the rectangular intermeshing pattern oriented in bonding area length direction 860 have a same length as the portions of the rectangular intermeshing pattern oriented in bonding area width direction 870, which repeats periodically along the bond line (i.e., along the y-axis). The shear forces 233, 237 are illustratively diametrically opposed and applied at least approximately perpendicular to the length direction (i.e., the y-axis) of the bonding area. Thus, the effect of the shear forces 233, 237 on the structurally bonded arrangement 160 are illustrated by investigating the effect of the shear forces acting on one interconnecting component 270b, which is illustratively shown as a portion 950 of the structurally bonded arrangement 160 of Figure 9A. It should be noted that the shear forces have a similar effect when acting on the other interconnecting components 270a to 270e.

The forces 233, 237 that are acting on interconnecting component 270b have an offset in y-direction as illustratively shown by forces 933, 937. The offset of the forces 933, 937 in y-direction is due to the fact that the interconnecting component 270b is arranged across the interspace 230 where the interspace 230 is oriented parallel to the x-axis.

The offset of forces 933, 937 in y-direction lead to a rotational torque in the circular interconnecting component 270b around its elastic center 960, which is located in the center of the circular interconnecting component 270b. This torque tends to rotate the circular interconnecting component 270b around its elastic center 960 in a rotational elastic movement, which is illustratively shown as angle 970 of Figure 9B. This rotational elastic movement leads to a shear force, which is transferring the forces 233, 237 by shear in general.

Besides the shear stresses caused by forces 233, 237, peel stresses may occur as well in single lap shear bondings. However, the rectangular intermeshing pattern of the interspace 230 in combination with the circular interconnecting component 270b that is arranged across the interspace 230 where the latter is oriented parallel to the x-axis reduces the peel stress significantly: as shown in Figure 9A, the length of the overlap between the circular interconnecting component 270b and the portion of the interspace 230 that is oriented parallel to the x-axis extends along the full diameter of the circular interconnecting component 270b and along the entire portion of the interspace 230 that is oriented parallel to the x-axis. This is the maximum possible overlap for reducing the very detrimental peel stresses in single lap shear bondings.

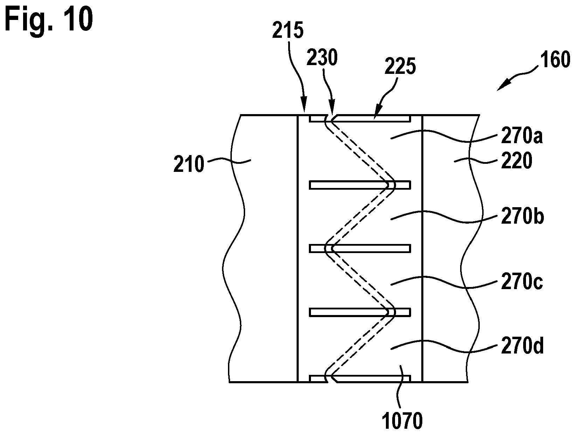

Figure 10 shows the structurally bonded arrangement 160 of Figure 6 with interconnecting components 270a, 270b, 270c, 270d that are loosely attached to each other in a chain of interconnecting components 1070. Illustratively, multiple interconnecting components including interconnecting components 270a, 270b, 270c, 270d may be loosely attached to each other for simplifying application of the multiple interconnecting components onto the first and second connecting areas 215, 225.

As an example, the chain of interconnecting components 1070 may be provided as a roll that is being released from a dispenser. As another example, the chain of interconnecting components 1070 may include interconnecting components that are arranged on a tape or band. If desired, the interconnecting components in the chain of interconnecting components 1070 may be arranged at same distances from each other.

The interconnecting components of the chain of interconnecting components 1070 are illustratively shown in Figure 10 as having a rectangular shape. However, the interconnecting components of the chain of interconnecting components 1070 may have any shape, if desired. For example, the interconnecting components of the chain of interconnecting components may have a circular shape, an elliptical shape or any zonogonal shape.

In fact, any intermeshing pattern (e.g., a zigzag pattern, a trapezoidal pattern, a sine wave pattern, a rectangular pattern, a sawtooth pattern, a chain of half-circles, or any combination thereof) may be combined with any shape of the interconnecting components (e.g., a circular shape, an elliptical shape or a zonogonal shape), if desired. The different possible combinations of a particular intermeshing pattern with a particular interconnecting component shape may exhibit different shear stresses and peel stresses. Thus, predetermined combinations of a particular intermeshing pattern with a particular interconnecting component shape may be suggested based on the requirements of the structurally bonded arrangement in terms of tension, shear, compression, and any combination thereof.

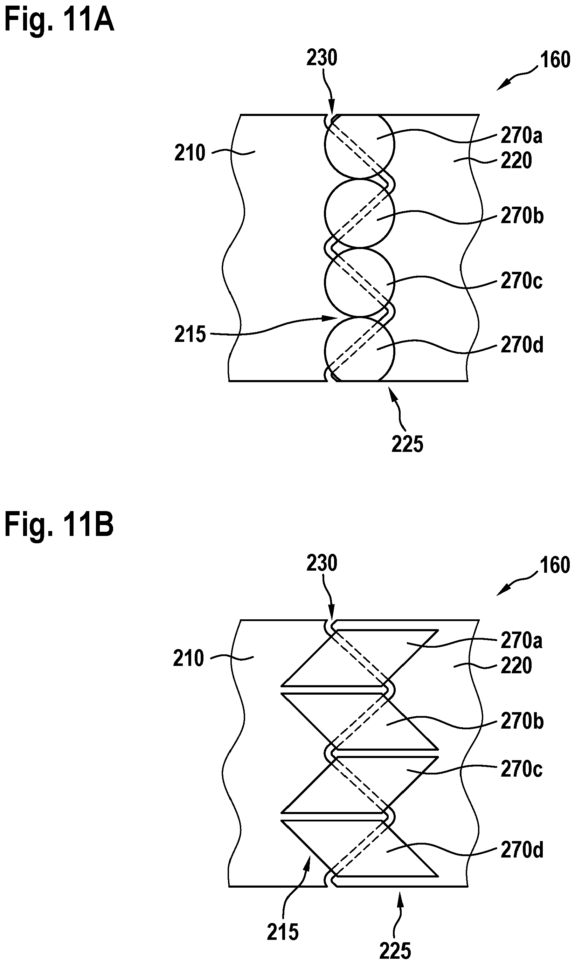

Figure 11A is a diagram of an illustrative structurally bonded arrangement 160 with multiple, circular interconnecting components 270a, 270b, 270c, 270d arranged across a zigzag intermeshing pattern of the interspace 230.

Figure 11B is a diagram of an illustrative structurally bonded arrangement 160 with multiple, rhombus-shaped interconnecting components 270a, 270b, 270c, 270d arranged across a zigzag intermeshing pattern of the interspace 230.

It should be noted that all interconnecting components that are structurally bonded separate from each other to same first and second connecting areas belong to a single and same bond line. However, the interconnecting components are structurally bonded separate from each other to the first connecting area at first bonding areas that are separate from each other and to the second connecting area at second bonding areas that are also separate from each other. The first and second bonding areas are separated by the interspace, and the interconnecting components are separated from each other at the interspace. Thus, cracks or other flaws cannot propagate from a sub-bonding to an adjacent sub-bonding as the independent sub-bondings are separated by gaps. All sub-bondings together compose the complete bond line for the complete load transfer, as all sub-bondings act together for load transfer.

Illustratively the independent sub-bondings may be relatively small compared to the overall length of the complete bond line in the length direction 860 of Figure 8 (i.e., parallel to the y-axis of Figures 2, 3, 8, and 9A). It is important to consider the sub-bondings as being a "small" part of the complete bond line: The theory of bonded joints is applicable as the independent sub-bondings are assessed as being one single complete bonding with special features. All independent sub-bondings are assessed separately, but may be evaluated by looking at the highest loaded sub-bonding only.

The split up into many sub-bondings limits a maximum damage size even with a fatigue crack which grows over time to one completely failed sub-bonding. This is similar to the design and sizing of rivet lines: the failure of one rivet is acceptable as long as the number of rivets is big enough so that the remaining rivets ensure the structural integrity. This is transferable to the bonding design with many independent separated interconnecting components in which the interconnecting components have to be small enough. With the sub-division into many interconnecting components there is almost no global impact on the complete bond line.

An additional benefit of the independent separated sub-bondings is that in case a crack occurs, it can only propagate till the edge of the interconnecting component. In this manner, a high fail-safe level of the complete bond line can be achieved which simplifies the certification of the design by the competent authorities, which is currently a major obstacle in the efforts to design certifiable structural bondings. Moreover, it offers relief for inspections and the requirements for repairs as the threat of continuous crack growth is limited under a known damage.

Another effect of the intermeshing pattern of the structurally bonded components is the fact that an unequal distribution of stresses is generated along the running length of the bond line. This offers opportunities to stop a crack from growing, as in areas with lower loads the crack loses its energy at the crack tip before the crack reaches the border of an interconnecting component. The individual shapes of the sub-bondings influence the distribution of stresses and areas with high and low stresses are the consequence. In the areas of low stress level, the cracks can be stopped even before they reach the limit of the interconnecting component.

A positive side effect is that in case of an inherent offset of the structurally bonded components with respect to the interconnecting component a small bending moment is generated which tries to turn the ends of the structurally bonded components and the interconnecting component against each other. However, due to the intermeshing pattern the interconnecting component is no longer loaded in the same way all along the running length of the bond line, but instead the loading alternates. In consequence, the moment is alternating as well. As the interconnecting component has a certain stiffness in torsion, this stiffness counteracts against the external moment and tends to reduce peel-off stresses locally, which is beneficial for the stress-peaks. In consequence, the load transfer capability can be increased by this alternating, intermeshing pattern of the two structurally bonded components in combination with the interconnecting component.

### Reference List

100 rotary-wing aircraft
110 multi-blade rotor
112 rotor blade
113 rotor hub
114 rotor head
115 rotor shaft
117 rotor axis
119 rotor plane
120 fuselage
123 cabin
127 rear fuselage
130 tail boom
140 counter-torque device
145 tail rotor
150 fin
160 structurally bonded arrangement
210 first component
215 first connecting area
220 second component
225 second connecting area
230 interspace
233, 234, 237, 238 forces
270 interconnecting components
270a, 270b, 270c, 270d, 270e interconnecting component
280a, 280b, 280c, 280d, 280e first bonding area
290a, 290b, 290c, 290d, 290e second bonding area
340 adhesive
440 adhesive
510 stiffener
614
first edge
616 first shape
624 second edge
626 second shape
630 intermeshing pattern
670 zigzag pattern
770 trapezoidal pattern
780 sine wave pattern
790 rectangular pattern
850 bonding area
860 bonding area length direction
870 bonding area width direction
933, 937 forces
950 portion of structurally bonded arrangement
960 elastic center
970 angle
1070 chain of interconnecting components

## Claims

1. A structurally bonded arrangement (160) for structurally bonding a first component (210) to a second component (220), comprising:
a first connecting area (215) of the first component (210);
a second connecting area (225) of the second component (220) that is spaced apart from the first connecting area (215) to form an interspace (230); and
multiple interconnecting components (270) arranged across the interspace (230), wherein first and second interconnecting components (270a, 270b) of the multiple interconnecting components (270) are structurally bonded separate from each other to the first connecting area (215) at separate first bonding areas (280a, 280b) and to the second connecting area (225) at separate second bonding areas (290a, 290b) thereby structurally bonding the first component (210) to the second component (220).

2. The structurally bonded arrangement (160) of claim 1, wherein a same side of the respective first and second interconnecting components (270a, 270b) is structurally bonded to a same side of the first connecting area (215) and to a same side of the second connecting area (225).

3. The structurally bonded arrangement (160) of claim 2, wherein the first and second interconnecting components (270a, 270b) are splice plates that each connect the first component (210) and the second component (220) to each other in a lap shear manner.

4. The structurally bonded arrangement (160) of any one of the preceding claims, wherein each one of respectively associated separate first bonding areas (280a, 280b) and separate second bonding areas (290a, 290b) have a same size and a same shape.

5. The structurally bonded arrangement (160) of any one of the preceding claims, wherein the first and second interconnecting components (270a, 270b) have a same size and a same shape.

6. The structurally bonded arrangement (160) of any one of the preceding claims, wherein the first and second interconnecting components (270a, 270b) have at least one of a different size or a different shape.

7. The structurally bonded arrangement (160) of any one of the preceding claims, wherein the first interconnecting component (270a) has one of a circular shape, an elliptical shape, or a zonogonal shape.

8. The structurally bonded arrangement (160) of any one of the preceding claims, wherein a first adhesive (340) bonds the first interconnecting component (270a) to the first and second connecting areas (215, 225), and a second adhesive (440) that is different than the first adhesive (340) bonds the second interconnecting component (270b) to the first and second connecting areas (215, 225).

9. The structurally bonded arrangement (160) of any one of the preceding claims, wherein the first interconnecting component (270a) is made from a first material, and wherein the second interconnecting component (270a) is made from a second material that is different than the first material.

10. The structurally bonded arrangement (160) of any one of the preceding claims, further comprising:
a stiffener (510) that is arranged across the interspace (230) between the first and second interconnecting components (270a, 270b) and rigidly attached to the first and second components (210, 220).

11. The structurally bonded arrangement (160) of any one of the preceding claims, wherein the first connecting area (215) comprises a first edge (614) with a first shape (616), and wherein the second connecting area (225) comprises a second edge (624) with a second shape (626) that fits to the first shape (616) at the interspace (230) to form an intermeshing pattern (630).

12. The structurally bonded arrangement (160) of claim 10, wherein the intermeshing pattern (630) formed by the first shape (616) and the second shape (626) is one of a zigzag pattern (670), a trapezoidal pattern (770), a sine wave pattern (780), a rectangular pattern (790), a sawtooth pattern, a chain of half-circles, or an arbitrary combination thereof.

13. The structurally bonded arrangement (160) of claim 10, wherein the intermeshing pattern (630) formed by the first shape (616) and the second shape (626) is a rectangular pattern (790) such that the interspace (230) is successively oriented in bonding area length direction (860) and in bonding area width direction (870), wherein the first and second interconnecting components (270a, 270b) have a circular shape and are arranged across the interspace (230) where the interspace (230) is oriented in bonding area width direction (870) such that the first bonding areas (280a, 280b) are separated from the second bonding areas (290a, 290b) by the interspace (230) oriented in bonding area width direction (870).

14. The structurally bonded arrangement (160) of any one of the preceding claims, wherein the multiple interconnecting components (270) are loosely attached to each other for simplifying application of the multiple interconnecting components (270) onto the first and second connecting areas (215, 225).

15. A rotorcraft (100) with a structurally bonded arrangement (160) according to any one of the preceding claims.
